# EUROPEAN PATENT SPECIFICATION

(11) **EP 2 424 247 B1**
(45) Date of publication and mention of the grant of the patent: **24.08.2016**
(21) Application number: 10767213.1
(22) Date of filing: 02.03.2010
(51) Int. Cl.: H04N 13/00, H04N 19/597, H04N 19/70, H04N 19/112, H04N 19/105, H04N 19/176

(54) **METHOD AND APPARATUS FOR PROCESSING MULTI-VIEW VIDEO SIGNAL**
VERFAHREN UND VORRICHTUNG ZUR VERARBEITUNG VON MEHRANSICHTSVIDEOSIGNALEN
PROCÉDÉ ET APPAREIL SERVANT À TRAITER UN SIGNAL VIDÉO À VUES MULTIPLES

(30) Priority: 21.04.2009 US 171093 P; 24.04.2009 US 172234 P; 29.04.2009 US 173609 P
(43) Date of publication of application: 29.02.2012
(73) Proprietor: LG Electronics Inc., Seoul 150-721 (KR)
(72) Inventor: JEON, Yong Joon, Seoul 137-724 (KR); LIM, Jae Hyun, Seoul 137-724 (KR); JEON, Byeong Moon, Seoul 137-724 (KR); PARK, Seung Wook, Seoul137-724 (KR)
(74) Representative: Frenkel, Matthias Alexander
(86) International application number: PCT/KR2010/001288
(87) International publication number: WO 2010/123198

(56) References cited:
- EP-A2- 1 608 181
- WO-A1-2008/023967
- KR-A- 20080 027 190
- KR-A- 20080 100 752
- KR-B1- 100 810 539
- LIM C S ET AL: "Prop text for MVC interlace", 30. JVT MEETING; 29-1-2009 - 2-2-2009; GENEVA, ; (JOINT VIDEO TEAM OFISO/IEC JTC1/SC29/WG11 AND ITU-T SG.16 ),, no. JVT-AD015, 25 January 2009 (2009-01-25), XP030007450, ISSN: 0000-0079 & Anthony Vetro ET AL: "Joint Draft 8.0 on Multiview Video Coding" In: "28. JVT MEETING; 20-7-2008 - 25-7-2008; HANNOVER, ; (JOINT VIDEO TEAM OFISO/IEC JTC1/SC29/WG11 AND ITU-T SG.16 ),", 27 November 2008 (2008-11-27), XP055105993, * page 15 - page 16 *
- ANONYMOUS: "Text of ISO/IEC 14496-10:200X 5th Edition", 86. MPEG MEETING;13-10-2008 - 17-10-2008; BUSAN; (MOTION PICTUREEXPERT GROUP OR ISO/IEC JTC1/SC29/WG11),, no. N10150, 30 March 2009 (2009-03-30), XP030016643, ISSN: 0000-0038

## Description

### TECHNICAL FIELD

The present invention relates to a multiview video signal processing technique.

### BACKGROUND ART

Compression coding means a series of signal processing techniques for transmitting digitalized information via a communication circuit or saving the digitalized information in a form suitable for a storage medium. As targets of compression coding, there are audio, video, characters, etc. In particular, a technique for performing compression coding on a video is called video sequence compression. A video sequence is generally characterized in having spatial redundancy and temporal redundancy.

Lim et al. in "Proposed Text Modification For Multiview Video Coding To Support Interlace Tools", 30. JVT Meeting, no. JVT-AD015, describe an access unit where all elements of the access unit have the same values of bottom_field_flag, i.e. all elements must be either top field or bottom field.

Soh & Jeon in EP1608181 A2 disclose a method for assigning reference indices consisting in allocating a higher index to the bottom reference field and a lower index to the top reference field or vice versa, but without taking into account the field type of the current macroblock.

### DISCLOSURE OF THE INVENTION

### TECHNICAL TASK

Accordingly, the present invention is directed to a method and apparatus for processing a multiview video signal that can substantially enhance efficiency in processing the multiview video signal.

### TECHNICAL SOLUTION

The present invention is to provide a method for decoding a stereo video signal, by which the stereo video signal may be more efficiently decoded by redefining an access unit.

The present invention is to efficiently code a multiview video signal by obtaining inter-view reference information indicating an inter-view dependency relation based on profile information indicating a stereo video and by generating and managing a reference picture list using the obtained inter-view reference information.

### ADVANTAGEOUS EFFECTS

The present invention defines profile information indicating a stereo video, thereby coding a multiview video signal more efficiently. The present invention re-defines an access unit, thereby performing inter-view prediction without being restricted by a coding format of an inter-view reference picture in decoding a stereo video. The present invention defines header information based on profile information indicating a stereo video, by which the number of bits to be transmitted may be decremented and by which a coding rate may be enhanced in a manner of reducing a burden of a DPB (decoded picture buffer). And, the present invention uses various kinds of configuration information on a multiview video based on profile information indicating a stereo video, thereby enabling more efficient coding.

### DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.
FIG. 1 is a schematic block diagram of a multiview video signal decoding apparatus according to an embodiment of the present invention.
FIG. 2 is a diagram of configuration information for a multiview video that can be added to a multiview video coded bitstream according to an embodiment of the present invention.
FIG. 3 is a diagram for a prediction structure of a stereo video according to an embodiment of the present invention.
FIGs. 4 to 6 are diagrams of syntax for limiting coding of multiview video coding information in decoding a stereo video according to embodiments of the present invention.
FIG. 7 is a diagram of a reference picture for inter-view prediction in accordance with a coding format of a picture in a base view and a picture in a non-base view according to an embodiment of the present invention.
FIG. 8 is a diagram for a method of assigning a reference picture index to a picture in a base view, when the picture in the base view is coded with a field, according to an embodiment of the present invention.

### BEST MODE

Additional features and advantages of the invention will be set forth in the description which follows, and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, a method of processing a video signal according to the present invention may include the steps of obtaining inter-view reference flag information on a picture of a base view, when the picture of the base view is used for an inter-view prediction in accordance with the inter-view reference flag information, obtaining a picture coding structure flag for the picture of the base view, generating a reference picture list for the inter-view prediction based on the picture coding structure flag, and predicting a pixel value of a picture of a non-base view using the reference picture list for the inter-view prediction.

Preferably, the base view may include a view codable independently from the non-base view and the non-base view may include a view coded with a dependency on the base view for the inter-view prediction.

Preferably, each of the picture of the base view and the picture of the non-base view may belong to a same access unit.

Preferably, the inter-view prediction flag information may include information indicating whether a current picture is used for the inter-view prediction and the inter-view prediction may include a prediction using a decoded sample of a reference picture in a view different from that of the current picture in coding the current picture.

Preferably, the picture coding structure flag may include a flag indicating whether a current picture is a frame picture or a field picture.

Preferably, when the picture of the base view is a field picture in accordance with the picture coding structure flag for the picture of the base view, the picture of the base view may correspond to either a top field or a bottom field.

More preferably, the top field and the bottom field may belong to a same access unit and may be identified based on a bottom field indication flag. And, the bottom field indication flag may include a flag indicating whether a current picture is the top field or the bottom field.

Meanwhile, the access unit may include a set of pictures and the pictures may have a same picture order count and a same video format.

Preferably, the picture of the non-base view may be coded into either a field or a macroblock adaptive frame/field.

It is to be understood that both the foregoing general description and the following detailed description are exemplary and explanatory and are intended to provide further explanation of the invention as claimed.

### MODE FOR INVENTION

Reference will now be made in detail to the preferred embodiments of the present invention, examples of which are illustrated in the accompanying drawings.

Compression coding of video signal data considers spatial redundancy, scalable redundancy, and inter-view redundancy. Compression coding scheme, which takes inter-view redundancy into consideration, is just an embodiment of the present invention. And, the technical idea of the present invention is applicable to temporal redundancy, scalable redundancy, and the like. In this disclosure, coding may include both concepts of encoding and decoding, which may. And, coding may be flexibly interpreted to correspond to the technical idea and scope of the present invention.

First of all, a video format of a video signal may be described as follows. In H.264/AVC, interlaced scanning is supported as a video format of a video signal. The interlaced scanning is a scheme of performing a scanning in a manner of dividing pixel lines into even lines and odd lines. In particular, the interlaced scanning is performed by being divided into 2 field signals. In an interlaced signal, one frame is constructed with 2 fields including a top field and a bottom field. The top field is one of the 2 fields configuring one frame, which is spatially situated above the other. And, the bottom field is one of the 2 fields configuring one frame, which is spatially situated below the other. When the interlaced signal is coded, it may be coded in a manner of determining a frame picture or a field picture for each picture. In doing so, it may be able to determine a frame picture or a filed picture for each picture using a picture coding structure flag (field_pic_flag). In particular, the picture coding structure flag may include a flag that indicates whether a current picture is a frame picture or a field picture. The picture coding structure flag may be able to indicate a coding structure of a current picture by a unit of slice in the current picture by obtaining a slice level. The frame picture may mean a picture that is processed in a manner of collecting the 2 fields to configure one frame. And, the field picture may mean a picture that is processed in a manner of configuring 2 independent pictures with the 2 fields.

In case of a field picture, a macroblock in the field picture may be coded into a field. This may be called a field macroblock. In case of a frame picture, a macroblock in the frame picture may be coded into a frame. This may be called a frame macroblock. Moreover, regarding a frame picture, coding may be performed in a manner of switching a frame coding and a field coding to each other by a unit of 2 macroblocks vertically attached to each other in the frame picture. This may be called MB-AFF (macroblock-adaptive frame-field coding). For the MB-AFF, it may be able to use a field frame switch flag (mb_adaptive_frame_field_flag). In particular, the field frame switch flag (mb_adaptive_frame_field_flag) may mean a flag that indicates whether there is a switching between a frame macroblock and a field macroblock in a picture.

In a bit sequence configuration of a video signal, defined is a separate layer structure called a NAL (network abstraction layer) between a VCL (video coding layer) dealing with a moving picture encoding process itself and a lower system that transports and stores encoded information. An output from an encoding process is VCL data and is mapped by NAL unit prior to transport or storage. The NAL unit basically includes two parts, i.e., a NAL header and an RBSP. The NAL header includes flag information (nal_ref_idc) indicating whether a slice as a reference picture of the NAL unit is included and an identifier (nal_unit_type) indicating a type of the NAL unit. Compressed original data is stored in the RBSP. And, RBSP trailing bit is added to a last portion of the RBSP to represent a length of the RBSP as an 8-bit multiplication. Moreover, an extension region of the NAL unit header can be limitedly included. For instance, if the information indicating the type of the NAL unit is associated with scalable video coding or indicates a prefix NAL unit, the NAL unit is able to include an extension region of the NAL unit header. In particular, if the nal_unit_type = 20 or 14, the NAL unit is able to include the extension region of the NAL unit header. And, configuration information for a multiview video can be added to the extension region of the NAL unit header according to flag information (svc_mvc_flag) capable of identifying whether it is MVC bitstream.

Meanwhile, if the information indicating the type of the NAL unit is information indicating a sequence parameter set, the RBSP may include information on the sequence parameter set. In particular, if nal_unit_type = 7, the RBSP may include information for a sequence parameter set. In this case, the sequence parameter set may include an extension region of the sequence parameter set according to profile information. For example, if profile information (profile_idc) is a profile relevant to multiview video coding or stereo video coding, the sequence parameter set may include an extension region of the sequence parameter set.

In the standard, various kinds of profiles and levels are defined. The profile may mean that technical components included in algorithm in a video coding process are standardized. And, the level may provide a rate for a decoder to decode a bitstream. And, the level may define a supportive range of technical components provided in each profile. And, a profile identifier (profile_idc) may identify that a bitstream is based on which profile. The profile identifier may mean a flag indicating a profile on which a bitstream is based. For instance, in H.264/AVC, if a profile identifier is 66, it may mean that a bitstream is based on a baseline profile. If a profile identifier is 77, it may mean that a bitstream is based on a main profile. If a profile identifier is 88, it may mean that a bitstream is based on an extended profile. Moreover, the profile identifier may mean identification information indicating that an inputted bitstream is coded into a standard of a specific type. For instance, the profile identifier may indicate a multiview video coded bitstream or a stereo video coded bitstream. Besides, the profile identifier may be included in a sequence parameter set. So, in order to handle a multiview video, it needs to be identified whether an inputted bit stream relates to a multiview profile or a stereo profile. If the inputted bitstream is identified as the multiview profile, it may be necessary to add syntax to enable at least one additional information for multiview to be transmitted. If the inputted bitstream is identified as the stereo profile, a syntax for the stereo video may be transmitted or limitation may be put on a transmission of other syntax unnecessary for the stereo video coding. In this case, the multiview profile may indicate a profile mode for handling multiview video, as an additional scheme of H.264/AVC. And, the stereo profile may indicate a profile mode for handling a video in 2 views, as an additional scheme of H.264/AVC.

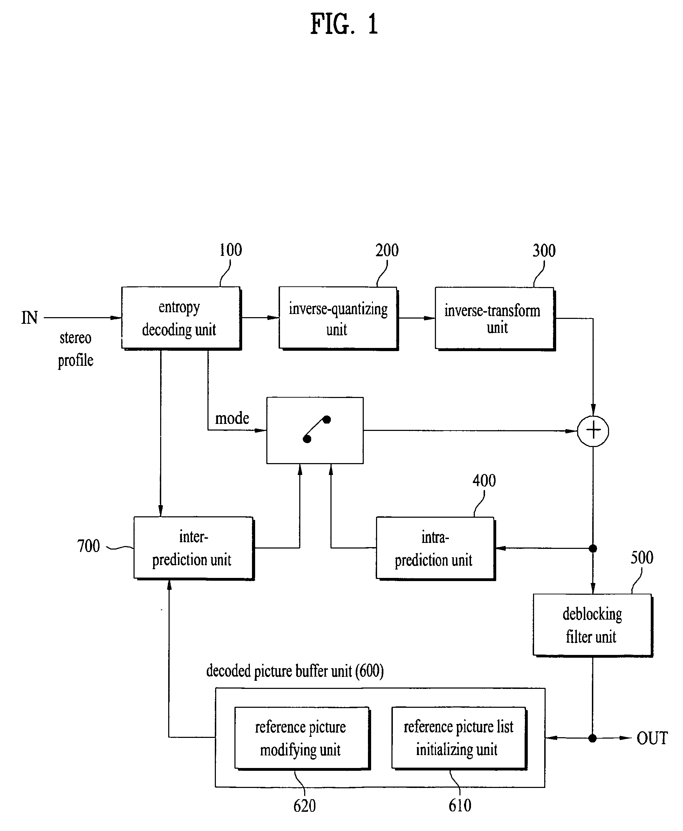

FIG. 1 is a schematic block diagram of an apparatus for decoding a multiview video signal according to the present invention.

Referring to FIG. 1, the decoding apparatus may include an entropy decoding unit 100, a inverse-quantizing unit 200, an inverse transform unit 300, an intra-predicting unit 400, a deblocking filter unit 500, a decoded picture buffer unit 600, an inter-prediction unit 700, and the like. And, the decoded picture buffer unit 600 may include a reference picture list initializing unit 610 and a reference picture list modifying unit 620.

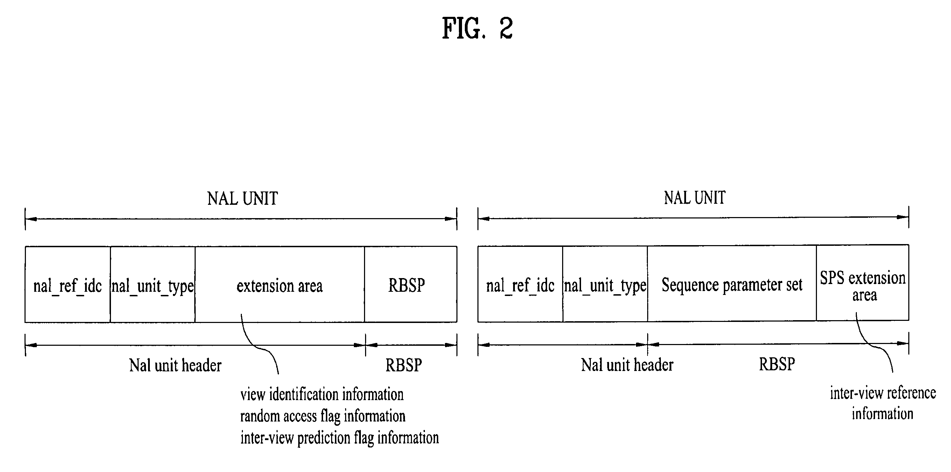

First of all, parsing may be performed by a unit of NAL to decode a received multiview video signal. In general, at least one sequence parameter set and at least one picture parameter set may be transferred to a decoder before a slice header and slice data are decoded. In this case, various kinds of configuration information can be included in a NAL header region or an extension region of a NAL header. For instance, it may be able to add flag information for identifying a presence or non-presence of an MVC bitstream in the NAL header region or the extension region of the NAL header. If an inputted bitstream is a multiview video coded bitstream according to the flag information, it may be able to add configuration information for a multiview video. For instance, the configuration information may include view identification information, random access flag information, inter-view prediction flag information, temporal level information, priority identification information, identification information indicating whether it is an instantaneous decoded picture for a view, and the like. They will be explained in detail with reference to FIG. 2.

FIG. 2 is a diagram of configuration information on a multiview video addable to a multiview video coded bitstream according to an embodiment of the present invention.

First of all, view identification information means information for discriminating a picture in a current view from a picture in a different view. The view identification information may be obtained from a header region of a video signal. For instance, the header region may include a NAL header region, an extension region of a NAL header, or a slice header region.

Number information of inter-view reference pictures, view identification information of an inter-view reference picture and the like may be needed to indicate inter-view dependency relation. In the following description, information used to indicate the inter-view dependency relation may be called inter-view reference information. In this case, the view identification information may be used to indicate the view identification information of the inter-view reference picture. In this case, the inter-view reference picture may mean a reference picture used in performing inter-view prediction on a current picture.

Random access flag information may mean information identifying whether a coded picture of a current NAL unit is a random access picture. In this case, the random access picture may mean a coded picture in which all slices only refer to slices on a same time zone. In a multiview video decoding process, an inter-view random access may be possible.

In constructing a reference picture list for inter-view prediction, the random access flag information may be used. And, the reference picture list for the inter-view prediction may be added to the reference picture list. And, the random access flag information can be also used to manage the added reference pictures for the inter-view prediction. For instance, by dividing the reference pictures into a random access picture and a non-random access picture, it may be able to make a mark indicating that reference pictures failing to be used in performing inter-view prediction.

Inter-view prediction flag information may mean information indicating whether a coded picture of a current NAL unit is used for inter-view prediction. The inter-view prediction flag information may be used for temporal prediction or inter-view prediction. In this case, identification information (nal_ref_idc) indicating whether NAL unit includes a slice of a reference picture may be used together. For instance, although a current NAL unit fails to include a slice of a reference picture according to the identification information, if it is used for inter-view prediction, the current NAL unit may be a reference picture used for inter-view prediction only. According to the identification information, if a current NAL unit includes a slice of a reference picture and used for inter-view prediction, the current NAL unit may be used for temporal prediction and inter-view prediction. If NAL unit fails to include a slice of a reference picture according to the identification information, it may be saved in a decoded picture buffer. This is because, in case that a coded picture of a current NAL unit is used for inter-view prediction according to the inter-view prediction flag information, it may be necessary to be saved.

The entropy decoding unit 200 performs entropy decoding on a parsed bit stream and a coefficient of each macroblock, a motion vector and the like are then extracted. The inverse-quantizing unit 200 and the inverse transform unit 300 obtain a coefficient value transformed by multiplying a received quantized value by a predetermined constant and then transform the coefficient value inversely to reconstruct a pixel value. Using the reconstructed pixel value, the intra-predicting unit 400 performs intra prediction from a decoded sample within a current picture. Meanwhile, the deblocking filter unit 500 is applied to each coded macroblock to reduce block distortion. A filter may smooth a block edge to enhance an image quality of a decoded frame. Selection of a filtering process depends on a boundary strength and a gradient of an image sample around a boundary. Pictures through filtering are outputted or saved in the decoded picture buffer unit 600 to be used as reference pictures.

The decoded picture buffer unit 600 plays a role in storing or opening the previously coded pictures to perform inter prediction. In doing so, in order to save the pictures in the decoded picture buffer unit 600 or to open the pictures, 'frame_num' of each picture and POC (picture order count) may be used. So, in MVC, since pictures in a view different from that of a current picture exists among the previously coded pictures, in order to use these pictures as reference pictures, view identification information for identifying a view of a picture may be usable as well as the 'frame_num' and the POC.

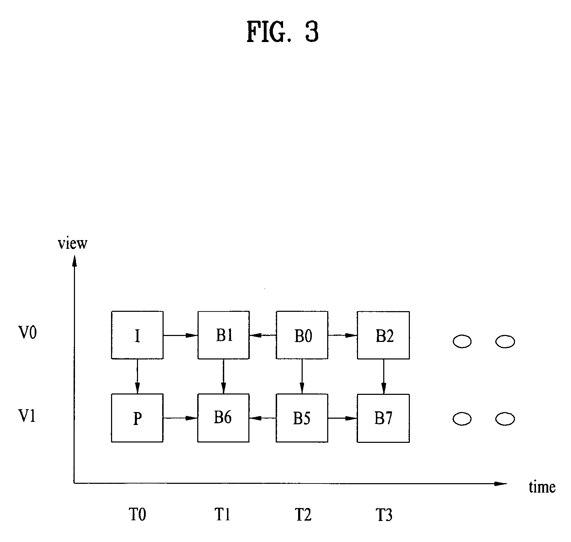

The decoded picture buffer unit 600 may include a reference picture managing unit (not shown in the drawing), a variable deriving unit (not shown in the drawing), a reference picture list initializing unit 610 and a reference picture list modifying unit 620. Since inter-view prediction may be performed in a multiview video coding, when a current picture refers to a picture in a different view, it may be able to generate a reference picture list for inter-view prediction. In order to generate the reference picture list for the inter-view prediction, it may be able to use view-related information. This shall be described in detail with reference to FIG. 3.

The variable deriving unit (not shown in the drawing) may derive variables used for reference picture list initialization. For instance, it may be able to derive the variable using 'frame_num' indicating an identification index of a picture. In particular, a variable FrameNum and a variable FrameNumWrap may be used for a short-term reference picture. First of all, the variable FrameNum may be equal to a frame_num value that is a syntax element. The variable FrameNumWrap may be used for the decoded picture buffer unit 600 to assign a small index to each reference picture and may be derived from the variable FrameNum. Using this derived variable FrameNumWrap, it may be able to derive a variable PicNum. In this case, the variable PicNum may mean an identification index of a picture used by the decoded picture buffer unit 600. In case of a long-term reference picture, it may be able to use a variable LongTermPicNum.

The reference picture list initializing unit 610 initializes a reference picture list using the above-mentioned variables. In doing so, a scheme of a reference picture list initializing process may vary in accordance with a slice type.

If a slice type is P/SP slice, initialization of a reference picture list for the P/SP slice may be performed in a manner of assigning a reference picture index based on a decoding order of a reference picture. Since the P/SP slice is used for forward prediction (L0 prediction) only, a reference picture list 0 may be generated.

First of all, a short-term reference picture may be arranged ahead of a long-term reference picture. In particular, a smaller index than that of the long-term reference picture may be assigned to the short-term reference picture.

A reference picture may be arranged in accordance with a variable (e.g., PicNum, LongterPicNum, etc.) derived from a value (e.g., frame_num, LongTermframeidx, etc.) indicating an identification index of a picture. Short-term reference pictures may be arranged in order from a reference picture having a highest variable (PicNum) value to a reference picture having a lowest variable value. Long-term reference pictures may be arranged in order from a reference picture having a lowest variable (LongtermPicNum) value to a reference picture having a highest variable value.

If a slice type is B slice, initialization of a reference picture list for the B slice may be performed in a manner of assigning a reference picture index based on a picture order count. Since the B slice is used for forward prediction and backward prediction (L0 prediction, L1 prediction), it may be able to generate a reference picture list 0 and a reference picture list 1. Yet, a short-term reference picture and a long-term reference picture may differ from each other in arrangement configuration. For instance, in case of the short-term reference picture, reference pictures may be arranged in accordance with a picture order count. In case of the long-term reference picture, reference pictures may be arranged in accordance with a variable (LongtermPicNum) value. In the reference picture list 0, short-term reference pictures may be arranged in order as follows. First of all, the short-term reference pictures are arranged in order from a reference picture having a highest picture order count to a reference picture having a lowest picture order count among reference pictures, each of which picture order count is lower than that of a current picture. Secondly, the rest of short-term reference pictures are arranged in order from a reference picture having a lowest picture order count to a reference picture having a highest picture order count among reference pictures, each of which picture order count is higher than that of the current picture. In the reference picture list 1, the long-term reference pictures may be arranged in order from a reference picture having a lowest variable (LongtermPicNum) highest picture order count to a reference picture having a highest variable (LongtermPicNum) among reference pictures.

In the reference picture list 1, short-term reference pictures may be arranged in order as follows. First of all, the short-term reference pictures are arranged in order from a reference picture having a lowest picture order count to a reference picture having a highest picture order count among reference pictures, each of which picture order count is higher than that of a current picture. Secondly, the rest of short-term reference pictures may be arranged in order from a reference picture having a highest picture order count to a reference picture having a lowest picture order count among reference pictures, each of which picture order count is higher than that of the current picture. In the reference picture list 1, the short-term reference pictures may be arranged in order from a reference picture having a lowest variable (LongtermPicNum) highest picture order count to a reference picture having a highest variable (LongtermPicNum) among reference pictures. Likewise, the short-term reference pictures may be arranged ahead of the long-term reference pictures. In particular, a smaller index than that of the long-term reference picture may be assigned to the short-term reference picture.

The reference picture list modifying unit 620 may play a role in improving a compression ratio by assigning a smaller index to a picture frequently referred to in the initialized reference picture list. A reference picture index for designating a reference picture may be coded by a unit of block. As a reference picture index for coding of a reference picture gets smaller, a code amounting to the smaller number of bits may be assigned. In doing so, inter-view reference information may be used to modify a reference picture list for inter-view prediction. For instance, in the process for modifying the reference picture list, a number information of inter-view reference pictures may be usable.

The reference picture managing unit (not shown in the drawing) may manage reference pictures to realize inter-picture prediction more flexibly. For instance, a memory management control operation method and a sliding window method may be usable. This is to manage a reference picture memory and a non-reference picture memory by unifying the memories into one memory and to realize efficient memory management with a small memory. In multiview video coding, since pictures in a view direction have the same picture order count, information for identifying a view of each of the pictures may be usable in marking them. And, reference pictures managed in the above manner may be used by the inter-prediction unit 700.

The inter-prediction unit 700 may perform inter prediction using the reference pictures saved in the decoded picture buffer unit 600. An inter-coded macroblock may be divided into macroblock partitions. Each of the macroblock partitions may be predicted from one or two reference pictures. The inter-prediction unit 700 compensates for a motion of a current block using informations transferred from the entropy decoding unit 100. Motion vectors of blocks neighbor to the current block are extracted from a video signal and a motion vector value of the current block is then obtained. And, the motion of the current block is compensated using the obtained motion vector predictor and a differential motion vector extracted from the video signal. And, it may be able to perform the motion compensation using one reference picture or a plurality of reference pictures. In multiview video coding, in case that a current picture refers to pictures in different views, it may be able to perform motion compensation using information for the inter-view prediction reference picture list saved in the decoded picture buffer unit 600. And, it may be also able to perform motion compensation using view identification information for identifying a view of the corresponding picture.

The inter-predicted pictures and the intra-predicted pictures by the above-explained processes are selected in accordance with a prediction mode to reconstruct a current picture.

FIG. 3 is a diagram for a prediction structure of a stereo video according to an embodiment of the present invention.

If a user intends to decode two views only from a prediction structure of a multiview video, a prediction structure shown in FIG. 3 may be provided. In this case, the two views may include a base view and a non-base view. In this case, a base view may mean a view that can be coded independently from other views. In particular, a picture belonging to a base view may perform inter prediction using another picture belonging to the base view and may not perform inter-view prediction using a picture belonging to a non-base view. And, it may correspond to a reference view for predicting a picture in another view. A sequence corresponding to the base view is coded by video codec scheme (MPEG-2, MPEG-4, H.26L series, etc.) to be formed as an independent bitstream. And, the non-base view may mean a view that is not the base view.

Referring to FIG. 3, T0 to T3 on a horizontal axis indicate frames according to times and V0 and V1 on a vertical axis may indicate frames according to views, respectively. Arrows shown in the drawing may indicate prediction directions of pictures, respectively. And, a numeral within each picture is one example of indicating a decoding order only. Thus, assuming that two views exist only, one view V0 may become a base view and the other view V1 may become a non-base view. Hence, the base view V0 may be usable as a reference view of the non-base view V1 but the non-base view V1 may be not a reference view of another view. This is because the base view V0 is an independently codable view. Therefore, if a stereo video is decoded, it may be able to raise coding efficiency by limiting the coding of informations necessary for multiview video coding.

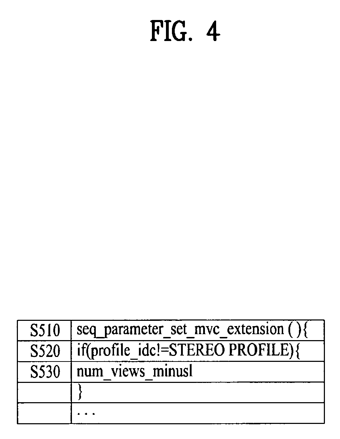

FIGs. 4 to 6 are diagrams of syntax for limiting coding of multiview video coding information in decoding a stereo video according to embodiments of the present invention.

In case that a profile identifier of a received bitstream indicates a bitstream coded as a stereo video, the received bitstream may include 2 view videos. In this case, information indicating the number of all views in the inter-view reference information may have a value that always indicates 2 views only. Hence, the information indicating the number of views obtained from an extension region of a sequence parameter may not be transmitted. And, the information indicating the number of all views may be lead to a value indicating 2 views. Only if the profile identifier of the received bitstream does not indicate a bitstream coded as a stereo video, the corresponding information may be transmitted.

Referring to FIG. 4, it may be able to check whether a profile identifier of a received bitstream indicates a bitstream coded as a stereo video [S520]. If the profile identifier indicates the bitstream coded as the stereo video, it may be able to skip parsing information (num_views_minus1) indicating the number of all views. On the contrary, if the profile identifier of the received bitstream does not indicate the bitstream coded as the stereo video, i.e., if the profile identifier indicates a bitstream coded as a multiview video, decoding may be performed by extracting information indicating the number of all views [S530]. In this case, the information indicating the number of all views may include the information indicating at least 3 view videos. And, the information indicating the number of all views may be obtained from an extension region of a sequence parameter [S510].

According to an embodiment of the present invention, if a profile identifier of a received bitstream indicates a bitstream coded as a stereo video, information related to a direction L1 in inter-view reference information may not be transmitted in some cases.

If the profile identifier of the received bitstream indicates a bitstream coded as a stereo video, the received bitstream may include a sequence for 2 view videos. In this case, as mentioned in the foregoing description with reference to FIG. 3, in case of a non-base view V1 that refers to a base view V0, there exists an inter-view reference picture in a direction L0 only. Hence, the information related to the direction L1 in the inter-view reference information may not be transmitted. In particular, only if the profile identifier of the received bitstream does not indicate a bitstream coded as a stereo video, the corresponding information may be transmitted.

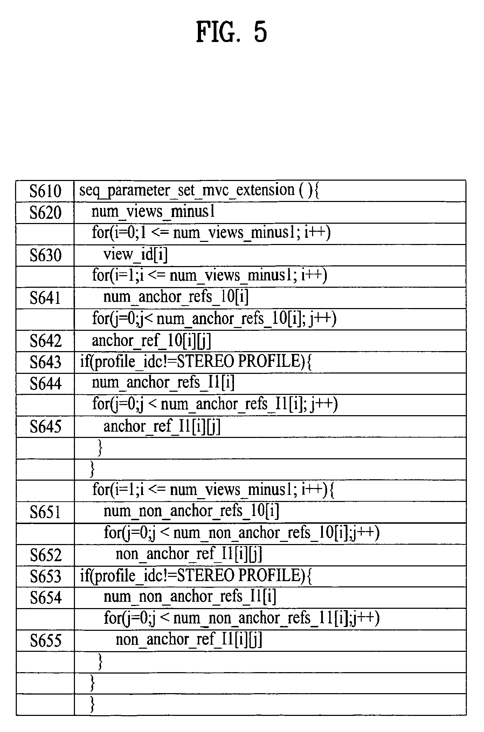

Referring to FIG. 5, number information of all views may be extracted from an extension region of a sequence parameter [S610, S620]. In accordance with the number information of all views, view identification information of each of the views may be extracted [S630]. In accordance with the number information of all views, number information of reference views for a direction L0 of a random access picture of each view may be extracted [S641]. In accordance with the number information of the reference views for the direction L0 of the random access picture, view identification information of the reference view for the direction L0 of the random access picture may be extracted [S642]. In the same manner of the step S641 and the step S642, information on a direction L1 may be extracted [S644, S655]. In doing so, it may be able to check whether a profile identifier of a received bitstream indicates a bitstream coded as a stereo video [S643]. If the profile identifier indicates the bitstream coded as the stereo video, it may be able to skip the extraction of the information on the direction L1. On the contrary, if the profile identifier does not indicate the bitstream coded as the stereo video, the information on the direction L1 may be extracted [S644, S645].

Moreover, the above-mentioned steps S641 to S645 may be identically applicable to a non-random access picture. This is shown in the steps S651 to S655 almost identical to the former steps S641 to S645, of which details shall be omitted from the following description.

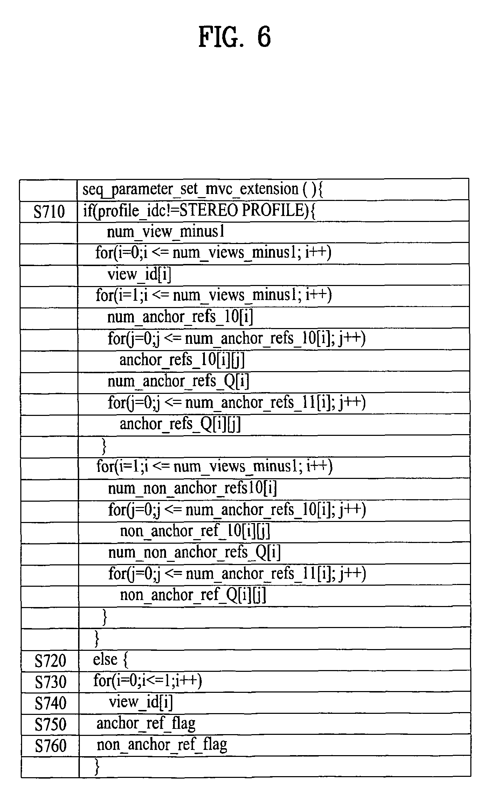

According to another embodiment of the present invention, referring to FIG. 6, if a profile identifier of a received bitstream indicates a bitstream coded as a stereo video [S720], the inter-view reference information described with reference to FIG. 2 is not transmitted but another information is transmitted to replace the inter-view reference information. For instance, this transmitted information may include one of each view identification information (view id[i]) of all views [S730, S740], flag information (anchor_ref_flag) indicating whether a random access picture is used for inter-view prediction [S750], and flag information (non_anchor_ref_flag) indicating whether a non-random access picture is used for inter-view prediction [S760]. In this case, the random access picture or the non-random access picture may be included in the base view. If the random access picture or the non-random access picture is included in the base view, it may not be used as a reference picture. Hence, the flag information may have a value set to 'false'. Therefore, only if a profile identifier of a received bitstream does not indicate a bitstream coded as a stereo video [S710], coding efficiency may be enhanced by extracting inter-view reference information of a multiview video.

Inter-view prediction may indicate a prediction that uses a decoded sample of an inter-view reference picture in a view different from that of a current picture in decoding the current picture. And, the current picture and the inter-view reference picture may belong to the same access unit.

In this case, the access unit is a set of pictures existing on the same time zone and the pictures may be defined as having the same picture order count.

Moreover, pictures belonging to the same access unit may be defined as having the same video format. For instance, if a picture of a base view is coded into a frame, a picture of a non-base view belonging to the same access unit with the base view may be coded into a frame. If the picture of the base view is coded into a field, the picture of the non-base view may be coded into a field. In particular, a field picture structure flag (field_pic_flag) for each of the picture of the base view and the picture of the non-base view may have the same value. Moreover, if the picture of the base view is coded into a macroblock adaptive frame/field, the non-base picture may be coded into a macroblock adaptive frame/field. In particular, a field frame switch flag (mb_adaptive_frame_field_flag) for each of the picture of the base view and the picture of the non-base view may have the same value. If the picture of the base view corresponds to a top field, the picture of the non-base view may correspond to a top field. If the picture of the base view corresponds to a bottom field, the picture of the non-base view may correspond to a bottom field. In particular, a bottom field indicating flag (bottom_field_flag) for each of the picture of the base view and the picture of the non-base view may have the same value. In this case, the bottom field indicating flag (bottom_field_flag) may mean a flag that indicates whether a current picture corresponds to a top field or a bottom field.

In case of a stereo video, a picture belonging to a non-base view may perform inter-view prediction using a decoded sample of a picture belonging to a base view. Likewise, the picture of the base view and the picture of the non-base view may belong to the same access unit and may follow the aforesaid definition of the access unit.

Meanwhile, if a profile identifier of a received bitstream indicates bitstream coded as a stereo video, it may be able to define that a field pair, i.e., a top field and a bottom field belong to a same access unit for a picture coded into a field.

According to the definition of the access unit, relations between inter-view prediction and a coding format of a picture shall be described as follows.

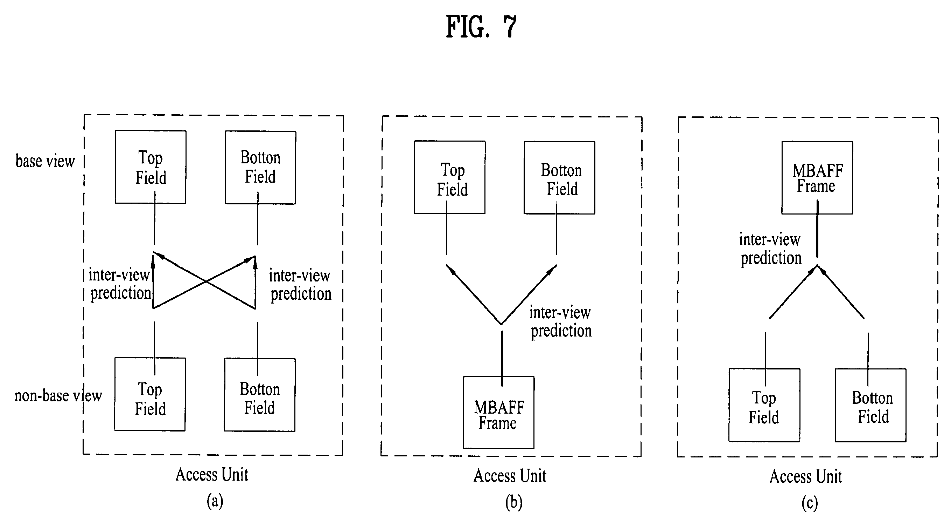

FIG. 7 is a diagram of a reference picture for inter-view prediction in accordance with a coding format of a picture in a base view and a picture in a non-base view according to an embodiment of the present invention.

Referring to FIG. 7 (a), a picture of a base view is coded into a field and the picture of the base view corresponds to a top field. In order for a picture of a non-base view to use the picture of the base view as an inter-view reference picture, as mentioned in the foregoing description, the picture of the non-base view should correspond to a top field as well. Yet, without being limited by the former description, since top and bottom fields of a base view belong to the same access unit in accordance with the definition of the access unit, the top field of the non-base view may be able to use the bottom field of the base view as an inter-view reference picture.

Referring to FIG. 7 (b), a picture of a base view is coded into a field and a picture of a non-base view is coded into a macroblock adaptive frame/field. Since top and bottom fields of the base view belong to the same access unit in accordance with the definition of the access unit, the picture of the non-base view may be able to perform inter-view prediction using the picture of the base view, i.e., the top field and the bottom field as inter-view reference pictures.

On the contrary, referring to FIG. 7 (c), a picture of a base view is coded into a macroblock adaptive frame/field and a picture of a non-base view is coded into a field. In this case, the picture of the non-base view, i.e., top field or bottom field may be able to use the picture of the base view coded into the macroblock adaptive frame/field for inter-view prediction.

In the following description, a method of generating a reference picture list for inter-view prediction in accordance with the definition of the access unit may be explained.

Besides, it may be apparent that the above-mentioned reference picture list generating method is identically applicable to the case in accordance with the definition of the access unit.

First of all, it may be able to obtain inter-view prediction flag information for a picture of a base view. In case that the picture of the base view is used as an inter-view reference picture of a non-base view, a reference picture index for inter-view prediction may be assigned to the picture of the base view and may be added to a reference picture list for temporal prediction of the picture of the non-base view. Meanwhile, the picture of the base view may be added to the reference picture list for the temporal prediction based on a random access flag. In particular, in accordance with whether the picture of the non-base view is a random access picture or a non-random access picture, it may be able to generate a reference picture list for the inter-view prediction. After a flag information (anchor_ref_flag) indicating whether the random access picture is used for the inter-view prediction or a flag information (non_anchor_ref_flag) indicating whether the non-random access picture is used for the inter-view prediction has been obtained, if the picture of the base view is used for the inter-view prediction in accordance with the flag information, it may be able to generate a reference picture list for the inter-view prediction.

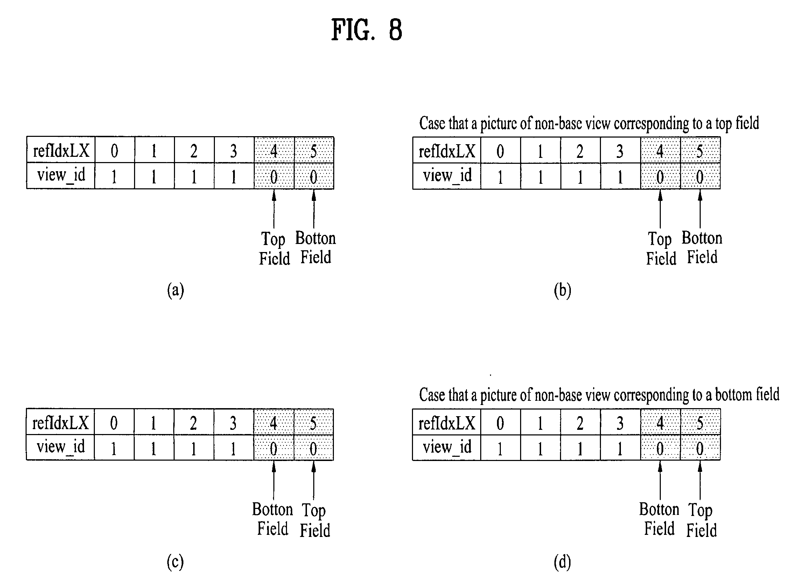

Moreover, if the picture of the base view is used as an inter-view reference picture, it may be able to obtain a picture coding structure flag (field_pic_flag) for the picture of the base view. In case that the picture of the base view is coded into a field in accordance with the picture coding structure flag (field_pic_flag), it may be able to obtain a bottom field indication field (bottom_field_flag). It may be able to check whether the picture of the base view corresponds to a top field or a bottom field in accordance with the bottom field indication flag (bottom_field_flag). Accordingly, it may be able to assign a reference picture index to each of the top field and the bottom field. A method of assigning the reference picture index shall be explained in detail with reference to FIG. 8 as follows.

FIG. 8 is a diagram for a method of assigning a reference picture index to a picture in a base view, if the picture in the base view is coded with a field, according to an embodiment of the present invention.

Referring to FIG. 8 (a), a top filed of a base view in a reference picture list for inter-view prediction may be set to have a reference picture index smaller than that of a bottom field of the base view belonging to the same access unit. Alternatively, referring to FIG. 8 (b), a bottom field of a base view may be set to have a reference picture index smaller than that of a top field of the base view belonging to the same access unit.

Based on a coding format of a picture of a non-base view, a reference picture index may be assigned to a picture of a base view, i.e., a top field and a bottom field. Referring to FIG. 8 (c), in case that a picture of a non-base view corresponds to a top field, it may be able to assign a reference picture index smaller than that of a bottom field to a top field of the picture of the base view. Alternatively, referring to FIG. 8 (d), in case that a picture of a non-base view corresponds to a bottom field, it may be able to assign a reference picture index smaller than that of a top field to a bottom field of the picture of the base view. Based on the created reference picture list, it may be able to predict a pixel value of a macroblock in the picture of the non-base view.

As mentioned in the foregoing description, a video decoder according to the present invention may be provided to a transmitter/receiver for multimedia broadcasting such as DMB (digital multimedia broadcast) to be used in decoding video signals, data signals and the like. And, the multimedia broadcast transmitter/receiver may include a mobile communication terminal.

A decoding/encoding method according to the present invention may be configured with a program for computer execution and then stored in a computer-readable recording medium. And, multimedia data having a data structure of the present invention can be stored in computer-readable recording medium. The computer-readable recording media include all kinds of storage devices for storing data that can be read by a computer system. The computer-readable recording media include ROM, RAM, CD-ROM, magnetic tapes, floppy discs, optical data storage devices, etc. and also includes a device implemented with carrier waves (e.g., transmission via internet). And, a bit stream generated by the encoding method is stored in a computer-readable recording medium or transmitted via wire/wireless communication network.

### INDUSTRIAL APPLICABILITY

Accordingly, the present invention may be applicable to encoding or decoding of a multiview video.

## Claims

1. A method of processing a video signal, comprising the steps of:
obtaining inter-view reference flag information for a picture of a base view, the inter-view reference flag indicating whether the picture of the base view is used for inter-view prediction of a current picture of a non-base view;
when the picture of the base view is used for an inter-view prediction in accordance with the inter-view reference flag information, obtaining a picture coding structure flag for the picture of the base view, the picture coding structure flag indicating whether the picture of the base view is a frame picture or a field picture;
generating a reference picture list for the inter-view prediction based on the picture coding structure flag; and
predicting a pixel value of the current picture of the non-base view using the reference picture list for the inter-view prediction,
wherein if the picture of the base view is a field picture, consecutive top field and bottom field of the base view are included in a same access unit, an access unit indicating a set of pictures having a same picture order count,
wherein the reference picture list for the inter-view prediction includes the consecutive top field and bottom field of the base view within the same access unit,
wherein if the current picture is a top field picture, the top field of the base view has a reference picture index smaller than that of the bottom field of the base view in the reference picture list, and
wherein if the current picture is a bottom field picture, the top field of the base view has a reference picture index larger than that of the bottom field of the base view the reference picture list.

2. The method of claim 1, wherein the base view is a view coded independently from the non-base view and the non-base view is a view coded with a dependency on the base view for the inter-view prediction.

3. The method of claim 1, wherein the picture of the base view and the current picture of the non-base view belongs to the same access unit.

4. The method of claim 1, wherein the inter-view prediction is a prediction using a decoded sample of a reference picture in a view different from that of the current picture in coding the current picture.

5. The method of claim 1, wherein the current picture of the non-base view is coded into either a field or a macroblock adaptive frame/field.

## Patentansprüche

1. Verfahren zum Verarbeiten eines Videosignals, umfassend die Schritte:
Erhalten von Inter-Ansicht-Referenzmarkierungs-Information für ein Bild einer Basisansicht, wobei die Inter-Ansicht-Referenzmarkierung angibt, ob das Bild der Basisansicht zur Inter-Ansicht-Prädiktion eines derzeitigen Bilds einer Nicht-BasisAnsicht verwendet wird;
wenn das Bild der Basisansicht für eine Inter-Ansicht-Prädiktion in Übereinstimmung mit der Inter-Ansicht-Referenzmarkierungs-Information verwendet wird, Erhalten einer Bildkodierungs-Strukturmarkierung für das Bild der Basisansicht, wobei die Bildkodierungs-Strukturmarkierung angibt, ob das Bild der Basisansicht ein Rahmenbild oder ein Feldbild ist;
Erzeugen einer Referenzbildliste für die Inter-Ansicht-Prädiktion basierend auf der Bildkodierungs-Strukturmarkierung; und
Prädizieren eines Pixelwerts des derzeitigen Bilds der Nicht-Basisansicht unter Verwendung der Referenzbildliste für die Inter-Ansicht-Prädiktion,
wobei, falls das Bild der Basisansicht ein Feldbild ist, aufeinanderfolgende obere und untere Felder der Basisansicht in einer gleichen Zugriffseinheit enthalten sind, wobei eine Zugriffseinheit einen Satz von Bildern mit einer gleichen Bildreihenfolgenanzahl angibt,
wobei die Referenzbildliste für die Inter-Ansicht-Prädiktion das aufeinanderfolgende obere und untere Feld der Basisansicht innerhalb der gleichen Zugriffseinheit aufweist,
wobei, falls das derzeitige Bild ein oberes Feldbild ist, das obere Feld der Basisansicht einen Referenzbildindex hat, der kleiner ist als der des unteren Felds der Basisansicht in der Referenzbildliste, und
wobei, falls das derzeitige Bild ein unteres Feldbild ist, das obere Feld der Basisansicht einen Referenzbildindex hat, der größer ist als der des unteren Felds der Basisansicht der Referenzbildliste.

2. Verfahren nach Anspruch 1, wobei die Basisansicht eine Ansicht ist, die unabhängig von der Nicht-Basisansicht kodiert ist, und die Nicht-Basisansicht eine Ansicht ist, die mit einer Abhängigkeit von der Basisansicht für die Inter-Ansicht-Prädiktion kodiert wird.

3. Verfahren nach Anspruch 1, wobei das Bild der Basisansicht und das derzeitige Bild der Nicht-Basisansicht zu der gleichen Zugriffseinheit gehören.

4. Verfahren nach Anspruch 1, wobei die Inter-Ansicht-Prädiktion eine Prädiktion ist unter Verwendung eines dekodierten Samples eines Referenzbilds in einer Ansicht, die unterschiedlich ist von der des derzeitigen Bilds bei Kodierung des derzeitigen Bilds.

5. Verfahren nach Anspruch 1, wobei das derzeitige Bild der Nicht-Basisansicht entweder als ein Feld oder als makroblockadaptiver Rahmen/makroblockadaptives Feld kodiert ist.

## Revendications

1. Procédé de traitement d'un signal vidéo, comprenant les étapes consistant à :
obtenir des informations d'un drapeau de référence inter-vues pour une image d'une vue de base, le drapeau de référence inter-vues indiquant si l'image de la vue de base est utilisée pour une prédiction inter-vues d'une image actuelle d'une vue non de base ;
lorsque l'image de la vue de base est utilisée pour une prédiction inter-vues en fonction des informations du drapeau de référence inter-vues, obtenir un drapeau de structure de codage d'image pour l'image de la vue de base, le drapeau de structure de codage d'image indiquant si l'image de la vue de base est une image de trame ou une image de champ ;
générer une liste d'images de référence pour la prédiction inter-vues sur la base du drapeau de structure de codage d'image ; et
prédire une valeur de pixels de l'image actuelle de la vue non de base à l'aide de la liste d'images de référence pour la prédiction inter-vues,
dans lequel si l'image de la vue de base est une image de champ, un champ supérieur et un champ inférieur consécutifs de la vue de base sont compris dans une même unité d'accès, une unité d'accès indiquant un ensemble d'images ayant un même compte d'ordre d'images,
dans lequel la liste d'images de référence pour la prédiction inter-vues comprend le champ supérieur et le champ inférieur consécutifs de la vue de base dans la même unité d'accès,
dans lequel si l'image actuelle est une image de champ supérieur, le champ supérieur de la vue de base présente un indice d'image de référence inférieur à celui du champ inférieur de la vue de base dans la liste d'images de référence, et
dans lequel si l'image actuelle est une image de champ inférieur, le champ supérieur de la vue de base présente un indice d'image de référence supérieur à celui du champ inférieur de la vue de base dans la liste d'images de référence.

2. Procédé selon la revendication 1, dans lequel la vue de base est une vue codée indépendamment de la vue non de base, et la vue non de base est une vue codée ayant une dépendance sur la vue de base pour la prédiction inter-vues.

3. Procédé selon la revendication 1, dans lequel l'image de la vue de base et l'image actuelle de la vue non de base appartiennent à la même unité d'accès.

4. Procédé selon la revendication 1, dans lequel la prédiction inter-vues est une prédiction utilisant un échantillon décodé d'une image de référence dans une vue différente de celle de l'image actuelle lors du codage de l'image actuelle.

5. Procédé selon la revendication 1, dans lequel l'image actuelle de la vue non de base est codée soit dans un champ, soit dans une trame/un champ adaptatif(ve) macrobloc.
